**Europäisches Patentamt**

**European Patent Office**

**Office européen des brevets**

(19)

(11) Veröffentlichungsnummer : **0 503 238 B1**

(12) # EUROPÄISCHE PATENTSCHRIFT

(45) Veröffentlichungstag der Patentschrift :
**03.08.94 Patentblatt 94/31**

(51) Int. Cl.$^5$ : **D02H 13/10, G01B 7/04**

(21) Anmeldenummer : **92100779.5**

(22) Anmeldetag : **18.01.92**

(54) **Vorrichtung zum Messen der Länge fadenförmigen textilen Guts.**

(30) Priorität : **09.03.91 DE 9102864 U**

(43) Veröffentlichungstag der Anmeldung :
**16.09.92 Patentblatt 92/38**

(45) Bekanntmachung des Hinweises auf die
Patenterteilung :
**03.08.94 Patentblatt 94/31**

(84) Benannte Vertragsstaaten :
**CH DE ES FR GB IT LI**

(56) Entgegenhaltungen :
**DE-A- 3 529 663**
**DE-A- 3 900 296**
**DE-A- 3 913 381**

(73) Patentinhaber : **Hacoba Textilmaschinen
GmbH & Co KG
Hatzfelder Strasse 161-163
D-42281 Wuppertal (DE)**

(72) Erfinder : **Buttermann, Günther
Karl-Sonnenschein-Strasse 57
W-4054 Nettetal 1 (DE)**

(74) Vertreter : **Sturies, Herbert et al
Patentanwälte
Dr.-Ing. Dipl.-Phys. Herbert Sturies
Dipl.-Ing. Peter Eichler,
Postfach 20 18 31,
Brahmsstrasse 29
D-42218 Wuppertal (DE)**

## Beschreibung

Die Erfindung bezieht sich auf eine Vorrichtung zum Messen der Länge fadenförmigen textilen Guts, das als Fadenschar auf einen Wickelbaum gewickelt wird, insbesondere auf einen Färbebaum, mit einer während des Wickelns auf den Baumwickel einwirkenden Anpreßeinrichtung, die mit einem den jeweiligen Wickelradius erfassenden Wegaufnehmer mechanisch gekoppelt ist, der Meßimpulse abgibt, mit einem baumangetriebenen Drehgeber, der je Umdrehung des Baums eine vorbestimmte Anzahl von Rechenimpulsen abgibt, und mit einem aus den Meßimpulsen und den Rechenimpulsen Wickelteillängen berechnenden und diese addierenden Rechner.

Eine derartige Vorrichtung ist aus der DE 39 00 296 A1 bekannt. Die Anpreßeinrichtung besteht im wesentlichen aus einer von einem Haltearm schwenkbar gehaltenen Anpreßwalze. Der Wegaufnehmer bestimmt den Schwenkwinkel dieses Haltearms und veranlaßt einen Impulsgeber, dem Schwenkwinkel entsprechend Meßimpulse abzugeben, mit denen dann der Rechner Wickelteillängen berechnet. Es hat sich jedoch erwiesen, daß diese Berechnungen nicht genau genug sind; denn Schwenkwinkeländerungen des Haltearms der Preßrolle sind nur dann den tatsächlich erfolgenden Radiusänderungen genügend genau proportional, wenn der Haltearm im wesentlichen senkrecht zur Horizontalen durch die Baumachse ist. Dabei ist zu berücksichtigen, daß sich die Wickel mehrerer Bäume gegebenenfalls unterschiedlich aufbauen, so daß aus dem gemessenen Schwenkwinkel allein nicht auf die Länge des Wickels geschlossen werden kann. Infolge unterschiedlichen Wickelaufbaus kann es jedoch zu unterschiedlichem Gewicht der Fehlereinflüsse durch Schwenkwinkelmessung kommen, so daß unterschiedliche Bäume unterschiedlich lange Wickel aufweisen. Das Messen unterschiedlicher Bäume mit demselben fehlerbehafteten Verfahren führt also nicht zu denselben Bewicklungslängen. Schon geringe Fehlmessungen können aber dazu führen, daß sich beim Weiterbearbeiten der fertig bewickelten Bäume erhebliche Längenunterschiede zwischen den Wickelbäumen ergeben, was insbesondere beim Zetteln nicht hingenommen werden kann. Das Zetteln einer Vielzahl von Bäumen muß nämlich dann beendet werden, wenn der kürzeste Wickel abgewickelt ist. Die auf den anderen Bäumen verbleibenden Restlängen textilen Guts sind nicht mehr zu verwerten und müssen vernichtet werden, was einen erheblichen Verlust bedeutet und daher verständlicherweise nicht geduldet werden kann.

Es ist allgemein bekannt, die Anpreßrolle der Anpreßeinrichtung zu benutzen, um Längenmessungen durchzuführen. Denn die Anpreßrolle wird gegen den Wickel gedrückt und läuft entsprechend dem aufgewickelten textilen Gut mit um. Es hat sich jedoch erwiesen, daß dieser Umlauf nicht schlupffrei ist. Insbesondere bei Färbebäumen, die eine Wickeldichte von 0,3 erfordern, tritt zu Fehlmessungen führender Schlupf auf. Das gilt insbesondere für die Brems- und für die Beschleunigungsphase.

Der Erfindung liegt daher die Aufgabe zugrunde, eine Vorrichtung mit den eingangs genannten Merkmalen so zu verbessern, daß sie insbesondere bei mit geringem Druck wirkenden Anpreßeinrichtungen eine genaue Längenmessung des aufzuwickelnden Guts ermöglicht.

Diese Aufgabe wird dadurch gelöst, daß der Wegaufnehmer der Anpreßeinrichtung schiebegelenkig mit einem Abstandsstab in Eingriff steht, der außerdem die Baumlängsachse schneidend angelenkt ist, und daß der Rechner eine den Achsdurchmesser d des Wickelbaums und die Lage der Anlenkstelle des Abstandsstabs an der Anpreßeinrichtung in Bezug auf die Preßstelle der Anpreßeinrichtung zu berücksichtigen erlaubende Korrektureinrichtung aufweist.

Wesentliches Element der Vorrichtung ist der Abstandsstab, der bei allen Stellungen der Preßeinrichtung die exakte Berücksichtigung der Lage der Preßstelle am Wickel ermöglicht. Besonders vorteilhaft ist dabei die die Baumachse schneidende Anlenkung, wenngleich beispielsweise auch eine Anlenkung an einer anderen, relativ zur Baumachse festliegenden Stelle möglich wäre, wozu dann allerdings ein sich aus der Geometrie dieser besonderen Anlenkstelle ergebender Korrekturfaktor durch den Rechner berücksichtigt werden müßte. Der Rechner kann den Achsdurchmesser des Wickelbaums berücksichtigen, so daß der Wickelradius bei Anlage der Preßstelle am Wickelbaum zutreffend mit Null ermittelt werden kann bzw. eingestellt ist. Außerdem kann der Rechner die Lage der Anlenkstelle des Abstandsstabs an der Anpreßeinrichtung in Bezug auf die Preßstelle der Anpreßeinrichtung berücksichtigen. Für beide Korrekturen hat der Rechner eine Korrektureinrichtung, die auf die bei der Vorrichtung vorhandenen baulichen Gegebenheiten jeweils abgestimmt wird.

Zweckmäßigerweise wird die Vorrichtung so ausgebildet, daß der Abstandsstab eine Zahnstange ist, deren eines Ende mit einem Gelenkring an der Baumachsaufnahmeeinrichtung der Wickelvorrichtung angelenkt ist, und deren anderes Ende von einer Axialbewegungen zulassenden Halterung in Eingriff mit einem Ritzel des Wegaufnehmers gehalten ist. Durch die Anlenkung an der Baumachsaufnahmeeinrichtung wird der Abstandsstab beziehungsweise die Zahnstange in besonders einfacher Weise die Baumachse schneidend angeordnet, und zwar außerhalb des Bewegungsbereichs des Wickelbaums. Der schiebegelenkige Eingriff des Abstandsstabs mit dem Wegaufnehmer wird durch eine Halterung erreicht, der das Ritzel des Wegaufnehmers ortsfest zugeordnet ist.

Damit die Preßrolle unbehindert durch Meßeinrichtungen zwischen den Baumscheiben des Wickelbaums auf den Wickel drücken kann, ist der Wegaufnehmer an einem Haltearm einer Preßrolle der Anpreßeinrichtung angelenkt. Dabei kann sich der Haltearm außerhalb desjenigen Bereichs befinden, der zwischen die Baumscheiben eingreift.

Besonders vorteilhaft ist es, daß der Abstandsstab mit der Achse der Preßrolle fluchtend angeordnet ist und daß die Halterung des Abstandsstabs mit dem Haltarm der Preßrolle gelenkig verbunden ist. Infolgedessen verläuft der Abstandsstab nicht nur durch die Baumlängsachse, sondern auch durch die Achse der Preßrolle und damit durch die Preßstelle der Preßrolle auf den Baumwickel. Infolgedessen sind winkelbedingte Fehler ausgeschlossen, beziehungsweise sich aus der Geometrie abweichender Anlenkstellen des Abstandsstabs an der Anpreßeinrichtung ergebende Korrekturfaktoren brauchen durch den Rechner nicht berücksichtigt zu werden.

Die Vorrichtung wird dadurch ausgestaltet, daß die Korrektureinrichtung des Rechners eine Einstellschaltung eines von dem Wegaufnehmer betätigten Zählers des Rechners ist, und daß der Zähler mit der Einstellschaltung vor Wickelbeginn auf den maximal möglichen Abstand der Preßstelle der Preßrolle von der Baumachse einstellbar ist. Die Einstellschaltung erlaubt es, den Zähler auf einen ausgewählten Wert einzustellen, und zwar zweckmäßigerweise auf den maximal möglichen Abstand der Preßstelle der Preßrolle von der Baumachse. Dieser Abstand ist einfach dadurch zu ermitteln, daß die Preßrolle von der Baumachse soweit wie möglich entfernt angeordnet wird, wonach eine Lehre zwischen der Baumachse und der Preßstelle den gewünschten Abstand festzustellen erlaubt. Dieser wird dann mit der Einstellschaltung in den Zähler eingegeben. Wird die Preßrolle dann gegen die Baumachse gefahren, so fängt der Rechner korrekt bei Null an zu zählen. Es werden mit einer einzigen Einstellung sämtliche Fehlermöglichkeiten ausgeschaltet, nämlich insbesondere unterschiedliche Achsdurchmesser des Wickelbaums und unterschiedliche Anordnungen der Preßstelle z.B. infolge unterschiedlicher Preßrollendurchmesser. Ändert sich keine der Größen, so kann der Zähler ohne vorheriges nochmaliges Messen mit der Einstellschaltung auf den vor dem ersten Wickel festgestellten Einstellwert eingestellt werden, oder es wird eine Reset-Taste benutzt, um den Zähler auf Null zu stellen, bevor der nächste Wickel hergestellt wird.

Um die Länge des aufgewickelten Guts ermitteln zu können, ist die Vorrichtung so ausgebildet, daß der Rechner ein Multiplizierglied hat, das von jedem Rechenimpuls erneut ansteuerbar ist und daraufhin eine Wickelteillänge aus einem mit den Meßimpulsen ermittelten Wickelradius und aus einem auf die Anzahl der Rechenimpulse pro Wickelbaumumdrehung abgestimmten Konstantwert zu berechnen vermag. Alle berechneten Wickelteillängen werden zur Gesamtwickellänge durch den Rechner beziehungsweise durch ein Rechenglied dieses Rechners addiert.

Da dem Rechner der jeweilige Wickelradius aus den Meßimpulsen stets bekannt ist, wird die Vorrichtung so ausgebildet, daß der Rechner einen Ausgang für eine dem Wickelradius proportionale elektrische Größe hat, und daß der Ausgang zur Kontrolle und/oder zur Beeinflussung der Härte des Wickels an eine Anzeige- und/oder Steuer- oder Regeleinrichtung angeschlossen ist. Aus dem Wickelradius kann grundsätzlich die Dichte des Wickels abgeleitet werden, die benötigt wird, um festzustellen, ob der Wickel für das Färben geeignet ist. Eine zu große Wickeldichte würde beispielsweise ein ungleichmäßiges Färben des fadenförmigen Textilguts bedeuten. Eine solche unzulässige Wickeldichte läge vor, wenn der Wickelradius des fertigbewickelten Baums zu klein wäre. In der Praxis gibt es für den richtigen Wickelradius Anhaltswerte, die bisher allgemein dadurch festgestellt wurden, daß der Abstand zwischen Wickelumfang und Baumscheibenkante gemessen wurde. Die nunmehr vorliegende Vorrichtung macht einen derartigen Meßvorgang überflüssig. Sie gestattet sogar, den Wickelradius bereits während des Wickelaufbaus festzustellen, also beim Wickeln, so daß es grundsätzlich möglich ist, die Härte des Wickels bereits während des Wickelvorgangs zu beeinflussen.

Die Erfindung wird anhand eines in der Zeichnung dargestellten Ausführungsbeispiels erläutert. Es zeigt:

Fig.1      eine schematische Darstellung einer Wickelvorrichtung mit Anpreßeinrichtung in Seitenansicht,

Fig.2      eine Aufsicht in Richtung A der Fig.1 im Endbereich des Wickelbaums,

Fig.3      Teilansicht in Richtung B der Fig.2 in teilweise geschnittener Darstellung, und

Fig.4      eine schematische Darstellung zur Berechnung der Wickellänge nach Art eines Blockschaltbilds.

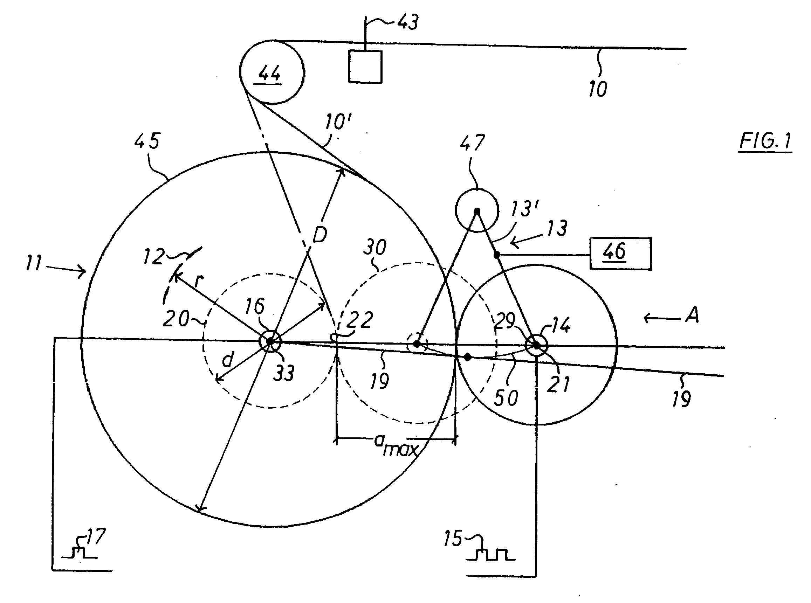

Fig.1 zeigt einen Wickelbaum 11, auf den fadenförmiges textiles Gut 10 in Gestalt einer Fadenschar aufgewickelt werden soll. Die Fadenschar durchläuft ein Leitriet 43 und wird von einer Umlenkwalze 44 so umgelenkt, daß sie auf die gestrichelt dargestellte Baumachse 20 aufgewickelt werden kann. Beim Aufwickeln ergibt sich zwischen Baumachse 20 und dem Außenumfang der Baumscheiben 45 ein Baumwickel 12 mit dem jeweiligen Wickelradius r, der also minimal den halben Durchmesser d der Baumachse 20 und maximal dem halben Durchmesser D der Baumscheiben 45 entspricht. Im ersten Fall ist der Verlauf der Fadenschar 10 zwischen der Umlenkwalze 44 und der Baumachse 20 wie strichpunktiert dargestellt, im zweiten Fall ist der Verlauf der Fadenschar 10 mit einer ausgezogenen Linie 10′ dargestellt.

Die Wickelvorrichtung 42 ist zur Glättung der Wickeloberfläche mit einer Anpreßeinrichtung 13 versehen.

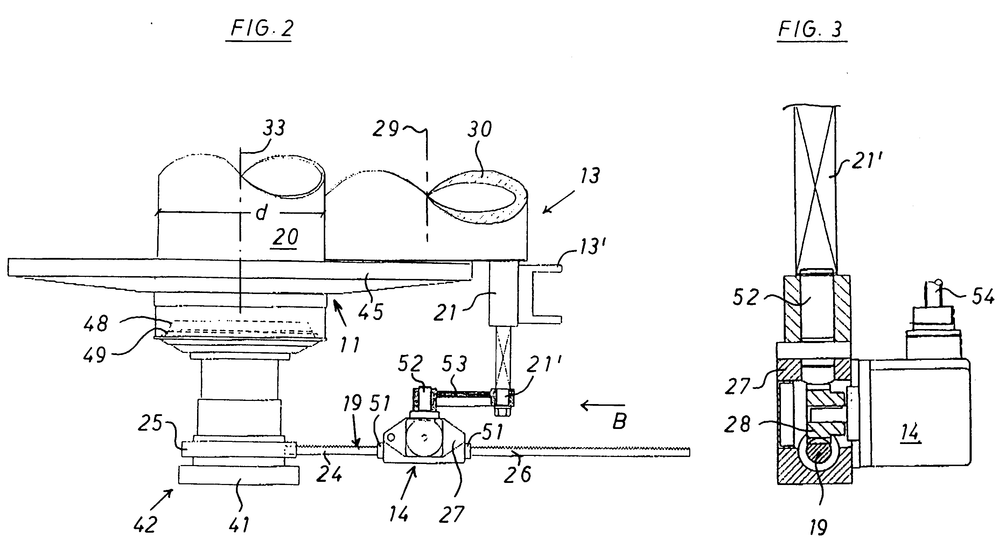

Diese muß insbesondere bei der Herstellung von Wickeln geringer Wickeldichte mit nur geringem Druck am Wickel 12 anliegen. Dieser Anlagedruck ist durch einen Andruckzylinder 46 einstellbar, der hydraulisch oder pneumatisch gesteuert werden kann. Er beaufschlagt einen Haltearm 13', der an einer Gelenkstelle 47 gelenkig gelagert ist und der an seinem anderen Ende eine Achse 29 einer Preßrolle 30 trägt. Zur konstruktiven Ausbildung dieses Haltearms 13' wird auf Fig.2 hingewiesen, wo der Haltearm 13' als ein U-förmiges Profil dargestellt ist, wobei es sich versteht, daß die Anpreßrolle 30 beidendig gehalten ist. Die Halterung erfolgt jeweils über eine Anlenkstelle 21 in nicht näher ausgeführter Weise. So versteht es sich beispielsweise, daß die Preßrolle 30 in Bezug auf ihre Anlenkstelle 21 in nicht dargestellter Weise drehgelagert ist. Da derartige Konstruktionen an sich bekannt sind, werden sie in Fig.2 nicht dargestellt und in Fig.1 wird die Anlenkstelle 21 zentrisch zur Preßrolle 30 angegeben.

Aus Fig.2 ist ersichtlich, daß die Baumachse 20 bzw. die Baumscheiben 45 einen Innenkonus 48 haben, in den ein Außenkonus 49 einer Baumachsaufnahmeeinrichtung 41 der Wickelvorrichtung 42 eingreift. Mit dieser Einrichtung 41 wird der Baum 11 hochgehalten, drehbar gelagert und bedarfsweise angetrieben.

Aus Fig.1 ist ersichtlich, daß die Anpreßeinrichtung 13 die Preßrolle 30 so weit zu schwenken vermag, daß die Preßrolle 30 sowohl am Außenumfang der Baumachse 20 anzuliegen vermag, als auch an dem maximal möglichen Außenumfang des fertiggestellten Wickels 12, der dem Außendurchmesser D der Baumscheibe 45 etwa entspricht. Die beiden Stellungen der Preßrolle 30 sind gestrichelt bzw. voll ausgezogen dargestellt. Die Rollenachse 29, die in Fig.1 mit der Anlenkstelle 21 zusammenfällt, bewegt sich auf einen Kreisbogenteilstück 50.

Als Besonderheit weist die erfindungsgemäße Vorrichtung einen Abstandsstab 19 auf, der die Baumlängsachse 33 schneidet, und der mit einem Wegaufnehmer 14 schiebegelenkig verbunden ist. Gemäß Fig.2 ist der Abstandsstab 19 eine Zahnstange. Deren eines Ende 24 ist an einem Gelenkring 25 befestigt, der die Baumachsaufnahmeeinrichtung 41 umklammert, also in Betriebsstellung des Wickelbaums 11 dessen Achse 33 schneidet.

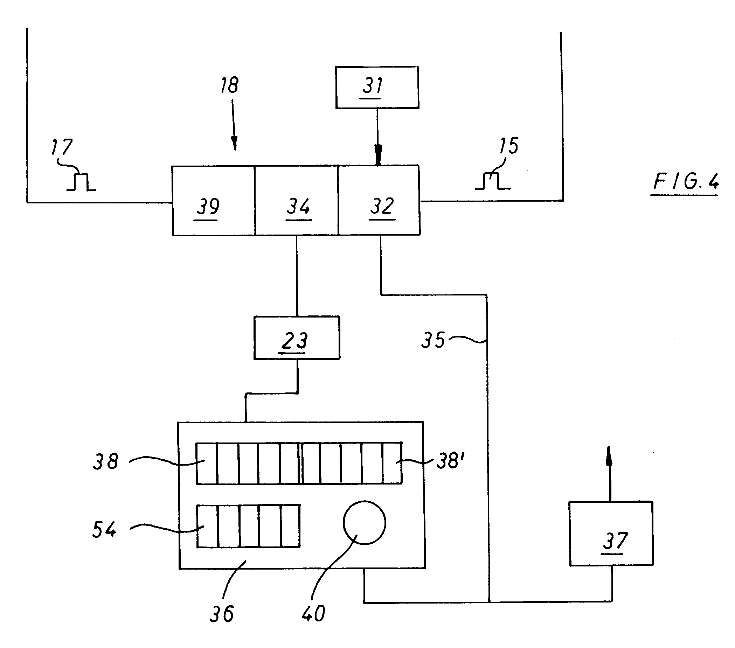

Der Wegaufnehmer 14 steht mit dem Abstandsstab in besonderem Eingriff durch eine Halterung 27, die ein Relativverschieben zwischen der Halterung 27 und der Zahnstange erlaubt, und der außerdem relative Lageänderungen des Wegaufnehmers 14 zum Haltearm 13' der Anpreßeinrichtung 13 gestattet. Für die Verschiebung des Abstandsstabs 19 relativ zur Halterung 27 hat diese zwei Schiebebuchsen 51. Außerdem ist sie mit einem Zapfen 52 versehen, der senkrecht zum Abstandsstab 19 in der Darstellungsebene angeordnet ist und Lagerstelle einer Kurbel 53 bildet, die mit ihrem anderen Ende an dem abgesetzten Ende 21' der Anlenkstelle 21 befestigt ist. Die Anlenkstelle 21' ist also eine Anlenkstelle für den Abstandsstab 19. Ändert sich die Lage der Preßrolle 30 in Fig.2 durch Anwachsen des Wickelradius r, so wird die Rolle 30 nach außen gedrückt und der Kurbelarm 53 in der Senkrechten zur Darstellungsebene im Gegenuhrzeigersinn geschwenkt, so daß die Halterung 27 relativ zum Abstandsstab 19 nach rechts bewegt wird. Dabei rollt ein Ritzel 28 des Wegaufnehmers 14 auf der Zahnstange ab, so daß der als Inkrementalgeber ausgebildete Wegaufnehmer 14 dementsprechende Meßimpulse über eine Anschlußleitung 54 abgeben kann. Die vom Wegaufnehmer 14 abgegebenen Meßimpulse sind in Fig.1 und in Fig.4 schematisch mit 15 bezeichnet.

Außerdem sind in Fig.4 Rechenimpulse 17 angegeben, die von einem in Fig.1 schematisch dargestellten Drehgeber 16 erzeugt werden, der starr mit der Baumachse 20 verbunden ist. Er besteht im wesentlichen aus einem Impulsgeber, der pro Umdrehung der Baumachse 20 von einem oder mehreren nicht dargestellten Näherungsschaltern angeregt wird, die mit dem Baum umlaufen und beispielsweise auf der Baumachsaufnahmeeinrichtung 41 oder einer daran befestigten Scheibe befestigt sind. Die von den Näherungsschaltern ausgelösten Impulse 15,17, die für Vorwärts- und Rückwärtslauf als unterschiedlich erkennbar sind, so daß sie entprechend durch den Zähler 32 ausgewertet werden, werden einem Rechner 18 zugeleitet, der Wickelteillängen lt berechnet. Für die Teillänge einer vollen Umdrehung des Wickelbaums gilt:

$$lt_u = 2 \times \pi \times r$$

Eine derartige Rechnung kann durchgeführt werden, wenn pro Umdrehung ein Rechenimpuls abgegeben wird. Werden zur genaueren Teilberechnung vier Rechenimpulse 17 abgegeben, so gilt:

$$lt_{u/4} = r \times \pi/2$$

Derartige Teillängenberechnungen werden durch den Rechner 18 mittels des Multipliziergliedes 34 durchgeführt, das über eine mit den Meßimpulsen 17 beaufschlagte Ansteuerschaltung 39 jeweils angeregt wird. Bei der Berechnung benutzt das Multiplizierglied 34 den jeweils im Zähler 32 vorhandenen Meßwert des Wickelradius r, der vom Wegaufnehmer 14 zur Verfügung gestellt wird. Je nach Ausbildung des Wegaufnehmers steht der Meßwert digital zur Verfügung, wie durch Meßimpuls 15 angedeutet, oder der Wegaufnehmer 14 stellt einen Analogwert zur Verfügung, der vom Zähler 32 direkt oder digitalisiert verwendet wird.

Die vom Multiplizierglied 34 ermittelten Wickelteillängen $lt_x$ müssen zur Gesamtwickellänge addiert werden, was durch den Addierer 23 erfolgt. Als Beispiel mit unterschiedlichen Werten für r berechnet der Addierer 23 wie folgt:

1. Umdrehung x bei vier Rechenimpulsen 17:

$$It_{x1} = 1{,}57 \times 50 = 78{,}5$$

$$It_{x2} = 1{,}57 \times 51 = 80{,}07$$

$$It_{x3} = 1{,}57 \times 52 = 81{,}64$$

$$It_{x4} = 1{,}57 \times 53 = 83{,}21$$

2. Umdrehung x+1 bei vier Meßimpulsen 17:

$$It_{(x+1)1} = 1{,}57 \times 54 = 84{,}78$$

$$It_{(x+1)2} = 1{,}57 \times 55 = 86{,}35$$

$$It_{(x+1)3} = 1{,}57 \times 56 = 87{,}92$$

$$It_{(x+1)4} = 1{,}57 \times 57 = 89{,}49$$

Der Addierer 23 berechnet daraus für zwei die hier betrachteten zwei Umdrehungen die Gesamtlänge von 671,96. Diese Summe wird im Längendisplay 38 angezeigt. Das Längendisplay 38 der Anzeigeeinrichtung 36 erlaubt also das fortlaufende Ablesen der Gesamtlänge. Ist eine vorbestimmte Gesamtlänge erreicht, kann die Maschine abgeschaltet werden, falls nicht vorher ein Grenzschalter angesprochen hat, weil der Baum 20 voll bewickelt ist. Um die Wickeleinrichtung 42 bzw. deren Antrieb gezielt abschalten zu können, ist ein Display 38′ für einen Vorabschaltwert vorhanden, der vor Wickelbeginn eingestellt wird und mit dem bei Erreichen ein Schalten der Wickelmaschine in den Kriechgang automatisch bewirkt wird, so daß bei langsamem Aufwickeln exakt auf Länge abgeschaltet werden kann.

Die Anzeigeeinrichtung 36 hat noch ein Display 54 für den Wickelradius r, der durch den Zähler 32 stets zur Verfügung steht und von diesem über einen Ausgang 35 in die Anzeigeeinrichtung 36 gelangt. Mit Hilfe dieses Displays 54 kann kontrolliert werden, ob der Wickel 12 bei der gewünschten Gesamtlänge, die durch das Display 38 angezeigt wird, den gewünschten Wickelradius r hat, der ein Maß für die Härte des Wickels 12 ist und damit ein Maß für die Dichte bzw. für die Eignung zum Färben.

Aus Fig.4 ist ersichtlich, daß der Zähler 32 von einer Einstellschaltung 31 beaufschlagt wird. Mit dieser Einstellschaltung 31 kann der Zähler vor Wickelbeginn auf einen bestimmten Wert eingestellt werden. Dieser vorbestimmte Wert entspricht dem maximal möglichen Abstand $a_{max}$ der Preßstelle 22 der Preßrolle 30 von der Baumachse 20. Es ist also möglich, die Halterung 13′ und damit die Preßrolle 30 in Fig.1 im Gegenuhrzeigersinn bis in die ausgezogen dargestellte Lage zu verschwenken, so daß die Preßstelle 22 ihren maximal möglichen Abstand $a_{max}$ von der Baumachse 20 hat. Die Lage der Preßstelle 22 fällt in der Regel nicht, wie in Fig.1 dargestellt, mit dem Außenumfang der Baumscheiben 45 zusammen. Der Abstand wird gemessen und als maximaler Wickelradius $r_{max}$ eingegeben. Dann wird die Preßrolle 30 in die gestrichelt dargestellte Anlage an die Baumachse 20 verschwenkt, wobei der Zähler 32 den Wert Null aufweist. Von null ausgehend kann jetzt der Wickelradius r in Abhängigkeit von der Anzahl der Umdrehungen des Wickelbaums 11 ermittelt werden. Wird ein leerer Wickelbaum 11 bewickelt, so kann die Nullstellung durch die auf der Anzeigevorrichtung 36 vorhandene Resettaste 40 eingestellt werden, wenn sich an den Abmessungen der Wickelanordnung nichts geändert hat.

## Patentansprüche

1. Vorrichtung zum Messen der Länge fadenförmigen textilen Guts (10), das als Fadenschar auf einen Wickelbaum (11) gewickelt wird, insbesondere auf einen Färbebaum, mit einer während des Wickelns auf den Baumwickel (12) einwirkenden Anpreßeinrichtung (13), die mit einem den jeweiligen Wickelradius (r) erfassenden Wegaufnehmer (14) mechanisch gekoppelt ist, der Meßimpulse (15) abgibt, mit einem baumangetriebenen Drehgeber (16), der je Umdrehung des Baums eine vorbestimmte Anzahl von Rechenimpulsen (17) abgibt, und mit einem aus den Meßimpulsen (15) und den Rechenimpulsen (17) Wickelteillängen (It) berechnenden und diese addierenden Rechner (18), **dadurch gekennzeichnet,** daß der Wegaufnehmer (14) der Anpreßeinrichtung (13) schiebegelenkig mit einem Abstandsstab (19) in Eingriff steht, der außerdem die Baumlängsachse (33) schneidend angelenkt ist, und daß der Rechner (18) eine den Achsdurchmesser (d) des Wickelbaums (11) und die Lage der Anlenkstelle (21) des Abstandsstabs (19) an der Anpreßeinrichtung (13) in Bezug auf die Preßstelle (22) der Anpreßeinrichtung (13) zu berücksichtigen erlaubende Korrektureinrichtung aufweist.

2. Vorrichtung nach Anspruch 1, **dadurch gekennzeichnet,** daß der Abstandsstab (19) eine Zahnstange ist, deren eines Ende (24) mit einem Gelenkring (25) an der Baumachsaufnahmeeinrichtung (41) der Wickelvorrichtung (42) angelenkt ist, und deren anderes Ende (26) von einer Axialbewegungen zulassenden Halterung (27) in Eingriff mit einem Ritzel (28) des Wegaufnehmers (14) gehalten ist.

3. Vorrichtung nach Anspruch 1 oder 2, **dadurch gekennzeichnet,** daß der Wegaufnehmer (14) an einem Haltearm (13′) einer Preßrolle (30) der Anpreßeinrichtung (13) angelenkt ist.

4. Vorrichtung nach Anspruch 3, **dadurch gekennzeichnet,** daß der Abstandsstab (19) mit der Achse (29) der Preßrolle (30) fluchtend angeordnet ist und daß die Halterung (27) des Abstandsstabs (19) mit dem Haltarm (13′) der Preßrolle (30) gelenkig verbunden ist.

5. Vorrichtung nach einem oder mehreren der Ansprüche 1 bis 4, **dadurch gekennzeichnet,** daß die Korrektureinrichtung des Rechners (18) eine Einstellschaltung (31) eines von dem Wegaufnehmer (14) betätigten Zählers (32) des Rechners (18) ist, und daß der Zähler (32) mit der Einstellschaltung (31) vor Wickelbeginn auf den maximal möglichen Abstand ($a_{max}$) der Preßstelle (22) der Preßrolle (30) von der Baumachse (20) einstellbar ist.

6. Vorrichtung nach einem oder mehreren der Ansprüche 1 bis 5, **dadurch gekennzeichnet,** daß der Rechner (18) ein Multiplizierglied (34) hat, das von jedem Rechenimpuls (17) erneut ansteuerbar ist und daraufhin eine Wickelteillänge (lt) aus einem mit den Meßimpulsen (15) ermittelten Wickelradius (r) und aus einem auf die Anzahl der Rechenimpulse (17) pro Wickelbaumumdrehung abgestimmten Konstantwert (k) zu berechnen vermag.

7. Vorrichtung nach einem oder mehreren der Ansprüche 1 bis 6, **dadurch gekennzeichnet,** daß der Rechner (18) einen Ausgang (35) für eine dem Wickelradius (r) proportionale elektrische Größe hat, und daß der Ausgang (35) zur Kontrolle und/oder zur Beeinflussung der Härte des Wickels (12) an eine Anzeige- und/oder Steuer- oder Regeleinrichtung (36,37) angeschlossen ist.

## Claims

1. A device for measuring the length of filamentary textile material (10) which is wound as a yarn sheet onto a winding beam (11), in particular onto a dying beam, having a pressing device (13) effective during the winding onto the beam winding (12), which pressing device is mechanically coupled to a displacement sensor (14) determining the respective winding radius (r), which displacement sensor gives off measuring pulses (15), having a beam-driven rotation transmitter (16) which gives off a predetermined number of calculation pulses (17) for each rotation of the beam and having a computer (18) calculating winding part lengths (lt) from the measuring pulses (15) and the calculation pulses (17) and adding these lengths together, characterised in that the displacement sensor (14) of the pressing device (13) is engaged in a sliding articulated manner with a distancing rod (19) which is linked in a cutting manner outside the longitudinal axis of the beam (33) and that the computer (18) comprises a correction device permitting the axis diameter (d) of the winding beam (11) and the position of the linkage point (21) of the distancing rod (19) at the pressing device (13) to be taken into account with respect to the pressing point (22) of the pressing device (13).

2. A device according to claim 1, characterised in that the distancing rod (19) is a toothed rod of which one end (24) is linked by a joint ring (25) to the beam axis receiving device (41) of the winding device (42) and of which the other end (26) is held in engagement with a pinion (28) of the displacement sensor (14) by a holding device (27) which permits axial movements.

3. A device according to claim 1 or 2, characterised in that the displacement sensor (14) is linked to a supporting arm (13′) of a pressing roller (30) of the pressing device (13).

4. A device according to claim 3, characterised in that the distancing rod (19) is disposed in alignment with the axis (29) of the pressing roller (30) and that the holding device (27) of the distancing rod (19) is connected in an articulated manner to the supporting arm (13′) of the pressing roller (30).

5. A device according to one or more of claims 1 to 4, characterised in that the correction device of the computer (18) is an adjusting device (31) of a counter (32) of the computer (18), which counter is actuated by the displacement sensor (14), and that the counter (32) can be adjusted by the adjusting device (31) prior to the commencement of winding to the maximum possible distance ($a_{max}$) of the pressing point (22) of the pressing roller (30) from the beam axis (20).

6. A device according to one or more of claims 1 to 5, characterised in that the computer (18) has a multiplication member (34) which can be triggered anew by each calculation pulse (17) and can then calculate a winding part length (lt) from a winding radius (r) determined by the measuring pulses (15) and from a constant value (k) coordinated to the number of calculation pulses (17) per winding beam rotation.

7. A device according to one or more of claims 1 to 6, characterised in that the computer (18) has an output (35) for an electric variable proportional to the winding radius (r) and that the output (35) is connected to a display and/or control or regulation device (36, 37) in order to control and/or influence the hardness of the winding (12).

**Revendications**

1. Dispositif pour mesurer la longueur d'un produit textile en forme de fil (10) qui est enroulé sous la forme d'une nappe de fils sur une ensouple (11), en particulier sur une ensouple de teinture, comportant un dispositif presseur (13) agissant sur la bobine d'ensouple (12) pendant l'enroulement et accouplé mécaniquement à un capteur de déplacement (14) qui enregistre le rayon de bobine (r) correspondant et émet des impulsions de mesure (15), un émetteur de rotation (16) entraîné par l'ensouple, qui émet pour chaque tour de l'ensouple un nombre prédéfini d'impulsions de calcul (17), et un calculateur (18) qui, à partir des impulsions de mesure (15) et des impulsions de calcul (17), calcule des longueurs partielles d'enroulement (lt) et les additionne, caractérisé en ce que le capteur de déplacement (14) du dispositif presseur (13) est en prise de façon articulée et coulissante avec une barre d'écartement (19) qui est par ailleurs articulée en coupant l'axe longitudinal (33) de l'ensouple, et en ce que le calculateur (18) comporte un dispositif de correction qui permet de tenir compte du diamètre (d) de l'axe de l'ensouple (11) et de la position du point d'articulation (21) de la barre d'écartement (19) au niveau du dispositif presseur (13) par rapport au point de pression (22) de celui-ci.

2. Dispositif selon la revendication 1, caractérisé en ce que la barre d'écartement (19) est une crémaillère dont une extrémité (24) est articulée, avec une bague d'articulation (25), au niveau du dispositif récepteur d'axe d'ensouple (41) du dispositif d'enroulement (42), tandis que son autre extrémité (26) est maintenue en prise avec un pignon (28) du capteur de déplacement (14) par une attache (27) qui autorise des déplacements axiaux.

3. Dispositif selon la revendication 1 ou 2, caractérisé en ce que le capteur de déplacement (14) est articulé au niveau d'un bras de support (13') d'un rouleau presseur (30) du dispositif presseur (13).

4. Dispositif selon la revendication 3, caractérisé en ce que la barre d'écartement (19) est disposée dans l'alignement de l'axe (29) du rouleau presseur (30), et en ce que l'attache (27) de la barre d'écartement (19) est reliée de façon articulée au bras de support (13') du rouleau presseur (30).

5. Dispositif selon l'une au moins des revendications 1 à 4, caractérisé en ce que le dispositif de correction du calculateur (18) est un circuit de réglage (31) d'un compteur (32) dudit calculateur (18), qui est actionné par le capteur de déplacement (14), et en ce que le compteur (32) peut être réglé avant le début de l'enroulement, grâce au circuit de réglage (31), sur l'écartement possible maximal ($a_{max}$) entre le point de pression (22) du rouleau presseur (30) et l'axe d'ensouple (20).

6. Dispositif selon l'une au moins des revendications 1 à 5, caractérisé en ce que le calculateur (18) comporte un élément multiplicateur (34) qui est apte à être commandé à plusieurs reprises par chaque impulsion de calcul (17) et peut calculer une longueur partielle d'enroulement (lt) à partir d'un rayon de bobine (r) déterminé par les impulsions de mesure (15) et d'une valeur constante (k) adaptée au nombre d'impulsions de calcul (17) par tour d'ensouple.

7. Dispositif selon l'une au moins des revendications 1 à 6, caractérisé en ce que le calculateur (18) comporte une sortie (35) pour une grandeur électrique proportionnelle au rayon de bobine (r), et en ce que la sortie (35) est raccordée, pour contrôler et/ou influencer la dureté de la bobine (12), à un dispositif indicateur et/ou de commande ou de régulation (36, 37).

FIG.1

FIG. 2

FIG. 3

EP 0 503 238 B1

FIG.4